# FASCICULE DE BREVET EUROPEEN

(11) **EP 1 406 970 B1**
(45) Date de publication et mention de la délivrance du brevet: **21.12.2011**
(21) Numéro de dépôt: 02764982.1
(22) Date de dépôt: 12.07.2002
(51) Int. Cl.: C08L 53/00

(54) **COMPOSITION COMPRENANT UN COPOLYMERE PORTANT AU MOINS DEUX BLOCS IONIQUEMENT CHARGES ET UN COMPOSE DE CHARGE IONIQUE OPPOSEE**
ZUSAMMENSETZUNG ENTHALTEND EIN MIT WENIGSTENS ZWEI IONISCHEN BLÖCKEN BLOCKCOPOLYMER UND EINE MIT ENTGEGENGESETZTER LADUNG KOMPONENTE
COMPOSITION COMPRISING A COPOLYMER BEARING AT LEAST TWO IONICALLY CHARGED BLOCKS AND AN OPPOSITE IONIC CHARGE COMPOUND

(30) Priorité: 13.07.2001 US 904947
(43) Date de publication de la demande: 14.04.2004
(73) Titulaire: RHODIA CHIMIE, 92512 Boulogne Billancourt Cedex (FR)
(72) Inventeur: BAVOUZET, Bruno, F-75010 PARIS (FR); DESTARAC, Mathias, F-75005 PARIS (FR); HERVE, Pascal, WEST WINDSOR, NJ 08550 (US); TATON, Daniel, F-33750 CAMARSAC (FR)
(86) Numéro de dépôt international: PCT/FR2002/002481
(87) Numéro de publication internationale: WO 2003/006549

(56) Documents cités:
- MAURITZ K A ET AL: "Poly(styrene-b-isobutylene-b-styrene) block copolymer ionomers (BCPI), and BCPI/silicate nanocomposites. 1. Organic counterion: BCPI sol-gel reaction template" POLYMER, ELSEVIER SCIENCE PUBLISHERS B.V, GB, vol. 43, no. 16, juillet 2002 (2002-07), pages 4315-4323, XP004359645 ISSN: 0032-3861

## Description

La présente invention a pour objet une composition aqueuse comprenant un copolymère bloc portant au moins deux blocs de même charge ionique, associé à au moins un composé ionique portant une ou plusieurs charges ioniques opposées à celles portées par le copolymère.

Plus particulièrement, la composition aqueuse se trouve soit sous la forme d'un gel, soit sous la forme d'un fluide visqueux.

Dans de nombreux domaines, on cherche à contrôler la rhéologie des formules dans des conditions variables de pH, de température par exemple. Dans ce but, il existe divers systèmes comme par exemple les phases structurées de tensioactifs, les dispersions de polymères.

L'objet de la présente invention a plus précisément trait au domaine des compositions présentant une viscosité élevée et/ou une élasticité élevée caractéristique de compositions gélifiées, du fait d'interactions électrostatiques entre les espèces présentes.

Cependant, ce type de compositions reste très peu développé, l'une des raisons principales étant due au fait qu'elles n'existent que dans des conditions très spécifiques et relativement limitées. Par exemple, et dans la plupart des cas, lesdites compositions ne sont obtenues que pour des associations précises de composés. En effet, le mélange de deux espèces de charge opposée conduit souvent à une séparation macroscopique de phases, résultant de la forte association électrostatique des espèces entre elles. Par ailleurs, les conditions dans lesquelles on n'observe pas ce genre d'inconvénient, et dans lesquelles des propriétés rhéologiques intéressantes et exploitables sont atteintes, sont, elles aussi, limitées. En effet, de telles conditions favorables se trouvent la plupart du temps dans une zone restreinte du diagramme de phases et fréquemment non loin d'un domaine biphasique. Par conséquent, lors de l'utilisation de ce type de système, le changement de certains paramètres, causé par exemple par une dilution, peut faire en sorte que le système tende vers une séparation macroscopique de phases non souhaitée. On observe alors bien souvent une déstabilisation du gel et la perte des propriétés rhéologiques attendues.

La présente invention a donc pour objet de proposer des compositions présentant une viscosité relativement élevée et/ou des propriétés de gel, avec pour origine des interactions électrostatiques entre les divers éléments constitutifs de ladite composition.

Par ailleurs, un autre objet de l'invention est proposer des compositions dont les caractéristiques précitées peuvent être observées non seulement pour une large gamme de composés mais aussi dans un domaine de concentrations étendu.

Ces buts et d'autres sont atteints par la présente invention qui a donc pour objet une composition aqueuse associant au moins un copolymère bloc (A) comprenant, à un pH de la composition donné, pHo, compris entre 1 et 14, au moins deux blocs portant au moins deux charges ioniques de même nature et au moins un bloc ne portant pas de charge ionique, avec au moins un composé (B) portant une ou plusieurs charges ioniques opposées à celle desdits blocs dans les mêmes conditions de pH ; le composé (B) étant choisi parmi les ions portant au moins deux charges ioniques, les tensioactifs portant au moins une charge ionique, les oligomères et/ou polymères portant au moins deux charges ioniques et/ou les particules minérales portant au moins deux charges ioniques ; la teneur en copolymère bloc (A) étant telle que la viscosité de la composition est supérieure à trois fois, de préférence supérieure ou égale à dix fois, celle d'une solution aqueuse de copolymère bloc (A) et à celle d'une solution aqueuse du composé (B), à pHo et dans les mêmes conditions de température et de concentration.

Un autre objet de l'invention est l'utilisation de la composition dans les domaines de l'exploitation de gisements de pétrole ou de gaz, de la détergence, de la cosmétique.

Enfin, un dernier objet de l'invention est constitué par des formulations comprenant la composition selon l'invention, destinées aux domaines de l'exploitation de gisements de pétrole ou de gaz, de la détergence, de la cosmétique.

Ainsi que cela a été indiqué auparavant, les compositions selon l'invention présentent l'avantage, entre autres, de permettre l'accès à des gels électrostatiques en mettant en oeuvre de nombreux composés, dans des gammes étendues de concentration.

Par ailleurs, les compositions selon l'invention sont relativement peu sensibles à des facteurs extérieurs comme la température.

Une telle propriété rend les compositions selon l'invention particulièrement appropriées pour des applications dans le domaine de l'exploitation de gisements de pétrole ou de gaz, notamment en tant qu'additif entrant dans la composition de fluides de forage. En effet, les températures rencontrées la plupart du temps dans ces applications sont élevées et beaucoup d'additifs mis en oeuvre en tant qu'agent épaississant perdent leur capacité viscosante dans de telles conditions, contrairement aux compositions selon l'invention.

Par ailleurs, les compositions selon l'invention, dans certains cas, peuvent aussi conserver de manière substantielle leur viscosité élevée, ainsi que leurs caractéristiques de gel le cas échéant, même avec l'addition de composés hydrophobes.

Selon une autre caractéristique des compositions selon l'invention, la sensibilité au pH peut être adaptée en fonction des besoins, selon la nature des motifs ioniquement chargés présents sur les blocs correspondants du copolymère. En effet, si les motifs comprennent un acide ou une base faible, leur charge ionique varie selon le pH du milieu. Cela peut représenter un avantage important dans le cas où l'on souhaite faire évoluer les caractéristiques rhéologiques de la composition en fonction de ce paramètre (gel stimulable au pH - pH responsive gels). Par exemple, dans certaines applications, il peut être avantageux de pouvoir disposer de moyens agissant quasiment instantanément qui permettent de déstructurer une composition gélifiée ou bien au contraire de gélifier la composition.

Par ailleurs, la présente invention permet de gélifier et/ou d'épaissir des compositions comprenant des espèces cationiques, ce qui est difficile pour beaucoup d'épaississants classiques. En effet, ces derniers sont dans la majorité des cas des composés anioniques. Or lorsque ces derniers sont au contact desdites espèces cationiques, on observe généralement une précipitation de l'ensemble.

Mais d'autres avantages et caractéristiques de la présente invention apparaîtront plus clairement à la lecture de la description et des exemples qui vont suivre.

Il est à noter que la composition aqueuse selon l'invention peut se présenter sous la forme d'un gel. Par gel, on désigne plus précisément des compositions qui présentent un module élastique (G') supérieur ou égal au module de perte (G") sur une gamme de fréquence comprise entre 1 et 10 Hz, avec une géométrie de type cône-plan ; les modules étant mesurés dans le régime linéaire de viscoélasticité, à 25°C, avec un Rhéomètre Rheometrics ou Carrimed.

De plus, dans ce qui suit, les conditions de température, de pH de la composition concernent la composition en tant que telle avant son utilisation, que celle-ci ne comprenne que le copolymère à bloc et le composé portant une ou plusieurs charges ioniques, ou bien qu'elle soit associée à divers autres constituants nécessaires pour obtenir des formulations complètes. Ces "conditions" peuvent aussi concerner la composition durant son utilisation, plus spécifiquement durant l'utilisation de la formulation complète.

Comme cela a été mentionné plus haut, le premier type d'élément constitutif de la composition selon l'invention est constitué par un ou plusieurs copolymères blocs (A) comprenant, à un pH donné de la composition, appelé pHo, compris entre 1 et 14, au moins deux blocs portant au moins deux charges ioniques de même nature et au moins un bloc ne portant pas de charge ionique. Deux charges ioniques sont de même nature lorsqu'elles sont de même signe.

Plus particulièrement, le copolymère bloc (A) est choisi parmi les copolymères blocs linéaires, des copolymères blocs de structure peigne, de structure étoile ou dendrimère (hyperbranchée).

Les copolymères blocs linéaires ont plus particulièrement une structure comprenant au moins trois blocs. De préférence, les copolymères sont des copolymères comprenant trois blocs (triblocs).

Les copolymères blocs de structure peigne présentent, de manière préférentielle, un squelette ne portant pas de charge ionique sur lequel sont greffés des segments portant au moins deux charges ioniques. Il est à noter que d'autres combinaisons sont possibles dès l'instant que le copolymère présente au moins deux blocs portant des charges ioniques et au moins un bloc n'en portant pas.

En ce qui concerne les copolymères blocs de structure étoile, plusieurs possibilités sont envisageables. Selon un mode de réalisation particulier, si l'on considère chaque branche de l'étoile, celle-ci peut comprendre soit un copolymère bloc, de préférence un dibloc, dont l'un porte au moins deux charges ioniques, l'autre non ; soit un homopolymère, portant ou non des charges ioniques. Quelle que soit la variante retenue, le choix des blocs est tel que le copolymère possède au moins deux blocs portant au moins deux charges ioniques et au moins un bloc n'en portant pas.

Il est rappelé que le copolymère mis en oeuvre dans la présente invention, est constitué d'une somme de blocs (fragments) comprenant au moins cinq unités monomères de répétition. En outre, ces blocs sont tels qu'il existe au moins deux blocs dont la composition chimique est différente. Par composition chimique différente, on entend plus particulièrement que la nature chimique d'au moins l'un des monomères est différente d'un bloc à l'autre, et/ou que les proportions respectives des monomères d'un bloc à l'autre sont différentes. Enfin, lesdits fragments peuvent se trouver dans la chaîne principale du polymère, ou dans les chaînes latérales (greffons) ou bien encore dans les branches (cas des polymères sous forme d'étoiles). Précisons de plus que chaque bloc peut présenter une répartition des monomères de type statistique, ou présenter un gradient de concentration.

Les copolymères dendrimères ou hyperbranchés ont plus particulièrement une structure arborescente.

Une première variante de l'invention est constituée par des compositions dans lesquelles les blocs portant au moins deux charges ioniques du copolymère bloc (A) sont des blocs anioniques à pHo.

De manière avantageuse, les monomères à partir desquels sont obtenus les blocs sont choisis parmi ceux qui restent sous une forme anionique sur une large gamme de pH, plus particulièrement entre 1 et 14 (acides forts) ou bien qui peuvent évoluer d'une forme neutre à anionique (ou inversement) selon la gamme de pH (acide faibles). Le terme anionique sera utilisé par la suite pour désigner à la fois les monomères sous forme ionique mais aussi sous une forme potentiellement ionisable, dans la gamme de pH de la composition.

De manière avantageuse, lesdits blocs anioniques du copolymère sont obtenus à partir d'au moins un monomère portant au moins une fonction carboxylique, sulfonique, sulfurique, phosphonique, phosphorique, sulfosuccinique, les sels correspondants, ou les précurseurs correspondants.

Plus particulièrement, les blocs anioniques du copolymère sont obtenus à partir d'au moins un monomère choisi parmi :
- les acides mono- ou poly- carboxyliques linéaires, ramifiés, cycliques ou aromatiques, les dérivés N-substitués de tels acides, les monoesters d'acides polycarboxyliques, , comprenant au moins une insaturation éthylénique;
- les acides vinyl carboxyliques linéaires, ramifiés, cycliques ou aromatiques ;
- les aminoacides, comprenant au moins une insaturation éthylénique, les N-carboxy anhydride d'aminoacides ;
seuls ou en mélanges, leurs dérivés sulfoniques ou phosphoniques, les macromonomères dérivant de tels monomères, les sels ou les précurseurs de ces monomères. Il est rappelé que le terme macromonomère désigne une macromolécule portant une ou plusieurs fonctions polymérisables.

A titre d'exemples de monomères susceptibles d'entrer dans la préparation des blocs anioniques du copolymère, on peut citer sans intention de s'y limiter :
- l'acide acrylique, l'acide méthacrylique, l'acide fumarique, l'acide itaconique, l'acide citraconique, l'acide maléique, l'acide oléique, l'acide linoléique, l'acide linolénique, l'acide acrylamido glycolique, l'acide 2-propène 1-sulfonique, l'acide méthallyl sulfonique, l'acide styrène sulfonique, l'acide α-acrylamido méthylpropane sulfonique, le 2-sulfoéthylène méthacylate, l'acide sulfopropyl acrylique, l'acide bis-sulfopropyl acrylique, l'acide bis-sulfopropyl méthacrylique, l'acide sulfatoéthyl méthacrylique, le monoester phosphate d'acide hydroxyéthyl méthacrylique, ainsi que les sels de métal alcalin, comme le sodium, le potassium, ou d'ammonium ;
- l'acide vinyl sulfonique, l'acide vinylbenzène sulfonique, l'acide vinyl phosphonique, l'acide vinylidène phosphorique, l'acide vinyl benzoïque, ainsi que les sels de métal alcalin, comme le sodium, le potassium, ou d'ammonium ;
- le N-méthacryloyl alanine, le N-acryloyl-hydroxy-glycine ;
seuls ou en mélanges, les macromonomères dérivant de tels monomères, les sels ou les précurseurs de ces monomères.

Il est à noter que l'on ne sortirait pas du cadre de la présente invention en mettant en oeuvre des monomères précurseurs de ceux qui viennent d'être cités. En d'autres termes, ces monomères présentent des motifs qui, une fois incorporés dans la chaîne polymère, peuvent être transformés, notamment par un traitement chimique tel que l'hydrolyse, pour redonner les espèces anioniques précitées. Par exemple, les monomères totalement ou partiellement estérifiés des monomères précités peuvent être mis en oeuvre en tant que précurseurs.

Selon une deuxième variante de la présente invention, les blocs du copolymère bloc (A) portant au moins deux charges ioniques, sont des blocs cationiques à pHo.

De manière avantageuse, les monomères à partir desquels sont obtenus les blocs sont choisis parmi ceux qui se trouvent sous une forme cationique quel que soit le pH ou bien qui peuvent évoluer d'une forme neutre à cationique (ou inversement) selon la gamme de pH (bases faibles). Le terme cationique sera utilisé par la suite pour désigner à la fois les monomères sous forme ionique mais aussi sous une forme potentiellement ionisable, dans la gamme de pH de la composition.

Plus particulièrement, lesdits blocs cationiques sont obtenus à partir d'au moins un monomère choisi parmi :
- les (méth) acrylates d'aminoalkyle, les (méth) acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ;
seuls ou en mélanges, leurs sels, ainsi que les macromonomères dérivant de tels monomères.

Lorsque lesdits monomères se trouvent sous une forme ionisée, plus particulièrement sous la forme d'un ammonium quaternaire de type -NR₃⁺, dans laquelle R, identiques ou non, représentent un atome d'hydrogène, un radical alkyle comprenant 1 à 10 atomes de carbone, un radical benzyle, éventuellement porteur d'un radical hydroxyle, le contre-ion peut être choisi parmi les halogénures comme par exemple les chlorures, les bromures, les sulfates, les hydrosulfates, les alkylsulfates (par exemple comprenant 1 à 6 atomes de carbone), les phosphates, les citrates, les formates, les acétates.

A titre d'exemples de monomères cationiques susceptibles d'entrer dans la composition des blocs cationiques du copolymère, on peut citer :
- diméthyl amino éthyl (méth)acrylate, diméthyl amino propyl (méth)acrylate le ditertiobutyl aminoéthyl (méth)acrylate, le diméthyl amino méthyl (méth)acrylamide, le diméthyl amino propyl (méth)acrylamide ;
- l'éthylène imine, la vinylamine, la 2-vinylpyridine, la 4-vinylpyridine ;
- le chlorure de triméthylammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyl ;
- le chlorure d'ammonium de diallyldiméthyl ;
seuls ou en mélanges, ainsi que les macromonomères dérivant de tels monomères.

Il est aussi précisé que les blocs portant des charges ioniques peuvent aussi comprendre un ou plusieurs monomères de type non ionique, qui seront décrits plus loin. Ces derniers peuvent être répartis au sein du bloc de manière statistique avec les monomères portant des charges ioniques ou bien selon un gradient de concentration. Au cas où des monomères non ioniques sont présents dans les blocs portant des charges ioniques, les monomères non ioniques mis en oeuvre sont de préférence choisis parmi les monomères hydrosolubles.

A titre d'exemples de monomères non ioniques à pHo, susceptibles d'être mis en oeuvre dans la préparation du ou des blocs du copolymère ne portant pas de charge ionique, on peut citer :
- l'oxyde d'éthylène, l'oxyde de propylène, l'oxyde de butylène,
- les esters des acides mono- ou poly- carboxyliques, linéaires, ramifiés, cycliques ou aromatiques, comprenant au moins une insaturation éthylénique,
- les amides des acides mono- ou poly- carboxyliques, linéaires, ramifiés, cycliques ou aromatiques, comprenant au moins une insaturation éthylénique,
- les nitriles αβ-éthyténiquement insaturés, la N-vinylpyrrolidone, les éthers vinyliques, les esters vinyliques, les monomères vinylaromatiques, les halogénures de vinyle ou de vinylidène, les amides de vinylamine,
- les monomères hydrocarbonés, linéaires ou ramifiés, comprenant au moins une double liaison carbone-carbone,
seuls ou en mélanges, ainsi que les macromonomères dérivant de tels monomères.

A titre d'exemples particuliers de monomères susceptibles d'entrer dans la préparation des blocs ne portant pas de charge ionique du copolymère, on peut citer, sans intention de s'y limiter :
- l'oxyde d'éthylène ;
- les esters d'acide (méth)acrylique avec un alcool comprenant 1 à 12 atomes de carbone comme le (méth)acrylate de méthyle, le (méth)acrylate d'éthyle, le (méth)acrylate de propyle, le (méth)acrylate de n-butyle, le (méth)acrylate de t-butyle, le (méth)acrylate d'isobutyle, l'acrylate de 2-éthylhexyl, le (méth)acrylate d'hydroxyéthyl ;
- l'acétate de vinyle (permettant d'obtenir l'alcool polyvinylique partiellement ou totalement désacétylé), le Versatate® de vinyle, le propionate de vinyle, le chlorure de vinyle, le chlorure de vinylidène, le méthyl vinyléther, l'éthyl vinyléther, le (méth)acrylonitrile, la N-vinylpyrrolidone, le vinylformamide, le vinylacétamide ;
- le (méth)acrylamide, les N-alkyl (méth)acrylamide comme l'isopropyl acrylamide, le N-méthylol (méth)acrylamide ;
- le styrène, l'α-méthylstyrène, le vinyltoluène, le butadiène, le chloroprène ;
seuls ou en mélanges, ainsi que les macromonomères dérivant de tels monomères.

Selon un mode de réalisation avantageux de la présente invention, le bloc ne portant pas de charge ionique du copolymère bloc, est de préférence hydrosoluble, ou le cas échéant soluble dans un mélange solvant/eau ; le solvant étant plus particulièrement un alcool comme l'éthanol, l'isopropanol.

En outre, il est préférable que la proportion de motifs hydrophiles dans au moins l'un des blocs ne portant pas de charge ionique, soit d'au moins 70 % en moles, de préférence au moins 90 % en moles, par rapport au nombre total de moles de motifs dudit bloc ne portant pas de charge ionique. Par motif hydrophile, on entend un monomère choisi parmi ceux qui, une fois homopolymérisé avec un degré de polymérisation compris entre 40 et 100, donnent un polymère soluble dans les conditions de température de la composition et à pHo. Plus particulièrement, la température est comprise entre 15 et 35°C.

Le ou les monomères entrant dans la composition du ou des blocs ne portant pas de charge ionique sont avantageusement choisis de telle sorte et dans des proportions telles, qu'une composition dans l'eau, comprenant le copolymère bloc (A) en solution entre 1 et 5% en poids, en présence d'un composé (B) à une teneur telle que le rapport molaire de la totalité des charges cationiques sur la totalité des charges anioniques est compris entre 0,001 et 1000, plus particulièrement entre 0,01 et 100, de préférence entre 0,1 et 10, à 25°C, ait un aspect monophasique stable. Plus particulièrement, cet état monophasique stable peut être observé à l'équilibre. On considère que l'équilibre est atteint, dans ces conditions de température, après un mois. En d'autres termes, ladite composition ne présente pas de séparation macroscopique de phases.

Selon un mode de réalisation plus particulier de l'invention, chaque bloc ne portant pas de charge ionique du copolymère bloc (A) présente une masse molaire en poids au moins trois fois supérieure à celle de l'un au moins des blocs portant des charges ioniques.

Les copolymères qui viennent d'être détaillés sont des composés bien connus de l'homme de l'art.

Ainsi, les copolymères peuvent être préparés en mettant en oeuvre des polymérisations par voie anionique, par voie cationique, par voie radicalaire dite vivante ou contrôlée. Il est de même possible de mettre en oeuvre, selon les monomères employés, une polymérisation par transfert de groupe (dite "group transfert") ou bien une polymérisation par ouverture de cycle (cas notamment de polymérisation à partir de cycle N-carboxy anhydride), ou encore par une polymérisation mettant en jeu une transestérification de groupements terminaux.

De préférence, les polymères sont obtenus en mettant en oeuvre au moins une étape de polymérisation radicalaire vivante.

A titre d'exemples de procédés de polymérisation dite vivante ou contrôlée, on peut notamment se référer aux :
- procédés des demandes WO 98/58974, WO 00/75207 et WO 01/42312 qui mettent en oeuvre une polymérisation radicalaire contrôlée par des agents de contrôle de type xanthates,
- procédé de polymérisation radicalaire contrôlée par des agents de contrôles de type dithioesters de la demande WO 98/01478,
- procédé de la demande WO 99/03894 qui met en oeuvre une polymérisation en présence de précurseurs nitroxydes,
- procédé de polymérisation radicalaire contrôlée par des agents de contrôle de type dithiocarbamates de la demande WO 99/31144,
- procédé de polymérisation radicalaire contrôlée par des agents de contrôle de type dithiocarbazates de la demande WO 02/26836.
- procédé de polymérisation radicalaire contrôlée par des agents de contrôle de type dithiophosphoroesters de la demande WO 02/10223,
- procédé de la demande WO 96/30421 qui utilise une polymérisation radicalaire par transfert d'atome (ATRP),
- procédé de polymérisation radicalaire contrôlée par des agents de contrôle de type iniferters selon l'enseignement de Otu et al., Makromol. Chem. Rapid. Commun., 3, 127 (1982),
- procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- procédé de polymérisation radicalaire contrôlée par les dérivés du tetraphényléthane, divulgué par D. Braun et al. Dans Macromol. Symp. 111,63 (1996), ou encore,
procédé de polymérisation radicalaire contrôlée par des complexes organocobalt décrit par Wayland et al. Dans J.Am.Chem.Soc. 116,7973 (1994).

Dans le cas de polymères portant des greffons (polymères peignes), ils peuvent notamment être obtenus par diverses méthodes, comme par exemple une copolymérisation d'un monomère avec un macromonomère. Plus particulièrement, cette méthode en met en oeuvre dans un premier temps le greffage à l'extrémité du segment d'une fonction polymérisable par voie radicalaire. Ce greffage peut être réalisé par des méthodes usuelles de chimie organique. Puis, dans un second temps, le macromonomères ainsi obtenu est polymérisé avec le monomère choisi pour former le squelette et on obtient un polymère dit "peigne".

On peut de même obtenir des polymères peigne par polymérisation d'un monomère suivie d'un greffage sur le squelette ainsi obtenu. Le greffage des segments polymériques latéraux sur un segment polymérique squelette peut être effectué selon des techniques classiques et familières à l'homme de l'art (European Polymer Journal 4, 343 (1968) par exemple). Parmi ces techniques classiques, on peut notamment citer celles dites de greffage direct.

Dans le cas de polymères de type étoile, les synthèses peuvent être essentiellement classées en deux groupes. Le premier correspond à la formation des bras des polymères à partir d'un composé plurifonctionnel constituant le centre (technique "core-first") (Kennedy, J.P. and coll. Macromolecules, 29, 8631 (1996), Deffieux, A. and coll. Ibid, 25, 6744, (1992), Gnanou, Y. and coll. Ibid, 31, 6748 (1998)) et le second correspond à une méthode où les molécules de polymères qui vont constituer les bras sont d'abord synthétisées et ensuite liées ensemble sur un coeur pour former un polymère en forme d'étoile (technique "arm-first"). Parmi les méthodes utilisables pour lier les bras, on peut notamment citer la méthode comprenant la réaction de ces bras avec un composé présentant une pluralité de groupes fonctionnels capables de réagir avec des groupements fonctionnels antagonistes terminaux desdits bras (Fetters, L.J. and coll. Macromolecules, 19, 215 (1986), Hadjichristidis, N. and coll. Macromolecules, 26, 2479 (1993), Roovers, J. and coll. Macromolecules, 26, 4324 (1993)). Citons également la méthode comprenant l'ajout d'un composé présentant une pluralité de groupes polymérisables, suivi de la polymérisation desdits bras (Rempp, P. and coll., Polym. Sci. Part C, 22, 145 (1968), Fetters, L J. and coll. Macromolecules, 8, 90 (1975), Higashimura and coll. Ibid, 24, 2309 (1991)).

Pour obtenir les chaînes polymères constituant ultérieurement les bras des étoiles, on a généralement recours à des méthodes permettant de contrôler la réaction de polymérisation. Ainsi, les polymérisations anionique et cationique vivantes sont les méthodes les plus utilisées actuellement.

Selon une méthode particulièrement avantageuse de synthèse de polymères de forme étoile, par la méthode "core-first", on effectue une étape de polymérisation radicalaire d'une composition comprenant au moins un monomère réticulant, une source de radicaux libres, et au moins un polymère de première génération.

Ce procédé présente l'avantage de pouvoir faire varier le nombre de bras et donc les masses molaires moyennes en nombre des polymères en étoile en ajustant un certain nombre de paramètres expérimentaux parmi lesquels : la concentration des réactifs dans le milieu réactionnel, la proportion et la nature chimique de ces réactifs, tels que l'agent réticulant ou le polymère de première génération, et la masse molaire des chaînes polymères linéaires de première génération.

Le polymère de première génération est obtenu par un procédé qui comprend une étape de polymérisation radicalaire contrôlée d'une composition comprenant au moins un monomère éthyléniquement insaturé, une source de radicaux libres, et au moins un agent de contrôle.

Selon une variante du procédé selon l'invention, l'obtention des polymères en étoile est réalisée en une seule étape en ajoutant le ou les monomère(s) réticulant(s) directement après la formation du polymère de première génération, sans isoler ce dernier, voire avant la fin de la formation du polymère de première génération.

Ainsi, plus spécifiquement, avant la fin de la formation du polymère de première génération peut correspondre au moment où il reste moins de 30% en poids du monomère éthyléniquement insaturé introduit lors de l'étape de polymérisation radicalaire contrôlée.

Les monomères réticulants peuvent être également ajoutés au polymère de première génération seuls ou avec un ou plusieurs comonomères éthyléniquement insaturés ou bien avec un autre ou plusieurs autres comonomères réticulants. En outre, les monomères réticulants peuvent être introduits en une seule fois, par portion, en addition continue ou semi-continue.

Les polymères de première génération peuvent être des homopolymères, des copolymères statistiques (de deux monomères ou plus), des copolymères à blocs (di, tri....) ou des copolymères à blocs où un, voire plus d'un, des blocs est un copolymère statistique.

Parmi les agents de contrôle utilisables donc pour préparer le ou les polymères de première génération, on peut notamment citer les agents d'addition-fragmentation réversible de type dithioester, xanthates, dithiocarbamates, thioether-thiones (notamment décrit dans FR 2794464).

Le procédé de préparation du polymère étoile, comme celui du polymère de première génération, est mis en oeuvre dans la plupart des cas en présence d'une source de radicaux libres. En effet, pour certains monomères, tels que le styrène, les radicaux libres permettant d'initier la polymérisation peuvent être générés par le monomère réticulant, ou le monomère à insaturation éthylénique, lui-même à des températures suffisamment élevées généralement supérieures à 100°C. Il n'est donc pas nécessaire, dans de tels cas, d'ajouter une source de radicaux libres supplémentaires.

La source de radicaux libres est généralement un initiateur de polymérisation radicalaire. L'initiateur de polymérisation radicalaire peut être choisi parmi les initiateurs classiquement utilisés en polymérisation radicalaire, comme par exemple :
- les peroxydes d'hydrogène tels que : l'hydroperoxyde de butyle tertiaire, l'hydro peroxyde de cumène, le t-butyl-peroxyacétate, le t-butyl-peroxybenzoate, le t-butyl peroxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis (hydroxyméthyl)-2-hydroxyéthy] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylène isobutyramide), le 2,2'-azobis(2-méthyl-N-[1,1-bis (hydroxyméthyl)-2-hydroxyéthyl], propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
   - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   - les persulfates, perborate ou perchlorate de métaux alcalins ou d'ammonium en association avec un bisulfite de métal alcalin, tel que le métabisulfite de sodium, et des sucres réducteurs,
   - les persulfates de métal alcalin en association avec un acide arylphosphinique, tel que l'acide benzène phosphonique et autres similaires, et des sucres réducteurs.La quantité d'initiateur à utiliser est déterminée de manière à ce que la quantité de radicaux générés soit d'au plus 50 % en mole, de préférence d'au plus 20 % en mole, par rapport à la quantité de polymère de première génération ou d'agent de contrôle.

Les monomères réticulants mis en oeuvre sont plus particulièrement choisis parmi les monomères qui polymérisent en présence des chaînes polymères actives du polymère de première génération pour donner de nouvelles chaînes polymères actives dont la polymérisation radicalaire contrôlée donne accès aux polymères en forme d'étoile.

Plus particulièrement, lesdits monomères réticulants sont choisis parmi des composés organiques comportant au moins deux insaturations éthyléniques et au plus 10 insaturations et connus comme étant réactifs par voie radicalaire. De préférence, ces monomères présentent deux insaturations éthyléniques.

A titre d'exemple, on peut mentionner les dérivés (méth)acryliques, (méth)acrylamido, ester ou éther vinylique, diénique, styrénique, alpha-méthyl styrénique et allylique.

Comme monomères réticulants, on préfère le N,N'-méthylènebisacrylamide, le divinylbenzène et le diacrylate d'éthylène glycol.

Les types et quantités de monomères réticulants mis en oeuvre varient en fonction de l'application finale particulière à laquelle est destiné le polymère en forme d'étoile. Ces variations sont facilement déterminées par l'homme du métier.

De préférence, le rapport molaire de composés réticulants par rapport aux polymères de première génération, est supérieur ou égal à 1. De préférence encore, ce rapport molaire est inférieur ou égal à 100. De manière plus préférentielle, ce rapport est compris entre 5 et 70, de préférence entre 5 et 20.

Ces monomères réticulants peuvent être utilisés seuls ou en mélanges.

Le procédé selon l'invention peut être réalisé en masse, en solution, en émulsion, en dispersion ou en suspension. De préférence, il est mis en oeuvre en solution ou en émulsion.

Lorsqu'il est réalisé en solution, en émulsion, en dispersion ou en suspension, l'extrait sec est avantageusement compris entre 1 et 20% en poids, encore plus avantageusement de 4 à 15%.

La température peut varier entre la température ambiante et 150°C selon la nature des monomères réticulants utilisés.

Généralement, le procédé est mis en oeuvre en l'absence de source UV, par amorçage thermique.

Le procédé de préparation de polymères de première génération peut être mis en oeuvre à partir d'un mélange de monomères à insaturation éthylénique. On obtient dans ce cas un polymère de première génération statistique. Il est également possible de sélectionner des monomères à insaturation éthylénique hydrophiles, présentant soit des charges ioniques positives, soit des charges ioniques négatives. Le polymère en forme d'étoile obtenu à partir de ce type de polymère de première génération présente ainsi des bras chargés soit positivement, soit négativement.

Selon une variante du procédé selon l'invention, on réalise, ultérieurement à l'étape de synthèse du polymères en étoile, une nouvelle étape de polymérisation radicalaire contrôlée, dont les conditions de mise en oeuvre sont identiques à celles décrites précédemment pour la synthèse du polymère de première génération, l'adjonction d'agent de contrôle n'étant cependant pas nécessaire.

Un tel mode de préparation est notamment décrit dans la demande WO 00/02939.

Selon un mode de réalisation particulier de l'invention, le copolymère possède des blocs portant des charges ioniques et ne portant pas de charge ionique, tels que pour l'un au moins des blocs portant des charges ioniques et pour l'un au moins des blocs ne portant pas de charge ionique, le degré de polymérisation est d'au moins 5, de préférence d'au moins 10.

Par ailleurs, l'un au moins des blocs du copolymère, de préférence les blocs portant une charge ionique, présentent de préférence un degré de polymérisation d'au plus 5000.

En outre, pour l'un au moins des blocs ne portant pas de charge ionique, le degré de polymérisation est plus particulièrement d'au moins 50, plus précisément d'au moins 500. Il est habituellement inférieur ou égal à 2.106.

En ce qui concerne la quantité de copolymère entrant dans la composition selon l'invention, celle-ci est plus particulièrement telle que la viscosité de la composition est au moins supérieure à trois fois, de préférence au moins supérieure à 10 fois, celle d'une solution aqueuse de copolymère bloc (A) et à celle d'une solution aqueuse de composé (B) dans les conditions de température et de concentration de la composition et à pHo.

La viscosité est mesurée au moyen d'un viscosimètre detype Carrimed, avec une géométrie à cône-plan ; la mesure est effectuée à 25°C à un gradient de cisaillement de 1 s⁻¹.

La masse molaire en poids du copolymère bloc (A) est de manière avantageuse supérieure ou égale à 104 g/mol. Plus particulièrement, elle est inférieure ou égale à 109 g/mol. De préférence, la masse molaire en poids du copolymère bloc (A) est comprise entre 5.10⁴ et 108 g/mol.

Il est à noter que les masses molaires sont des masses en poids, absolues, qui sont mesurées par MALLS (Multiangle laser light scattering) couplée à une chromatographie par perméation de gel.

Selon un mode de réalisation avantageux de l'invention, la teneur en copolymère bloc est comprise entre 0,001 à 30% en poids de la composition, de préférence comprise entre 0,01 et 5% en poids de la composition.

Selon une variante de la présente invention, le copolymère bloc tel qu'il vient d'être décrit, est associé à au moins un copolymère dibloc, qui à pHo, comprend un bloc portant au moins une charge ionique de même nature que celle des blocs portant au moins deux charges ioniques du copolymère à bloc (A), et un bloc ne portant pas de charge ionique.

Il est à noter que ce qui a été mentionné auparavant relativement à la nature des monomères des types ionique et non ionique, de même qu'aux modes de préparation de ces copolymères, reste valable et l'on pourra s'y référer pour ce qui a trait au copolymère dibloc.

Lorsqu'il est présent, et s'il est associé à un copolymère (A) linéaire, la quantité de copolymère dibloc, exprimée en pourcentage en poids, rapportée à la somme du copolymère (A) précité et du copolymère dibloc, représente 50 à 99,9 %, de préférence entre 80 et 99% en poids.

Dans le cas où ledit copolymère dibloc est associé à un copolymère (A) de structure peigne, ramifiée, étoile ou dendrimère, la quantité de copolymère dibloc, exprimée en pourcentage en poids, rapportée à la somme du copolymère (A) précité et du copolymère dibloc, représente de 0 exclu à 99 %, avantageusement de 0 exclu à 60%.

Le deuxième élément constitutif entrant dans la composition selon l'invention est constitué par au moins un composé (B) portant au moins une charge ionique opposée à celle des blocs portant au moins deux charges ioniques du copolymère bloc (A), à pHo; le composé (B) étant choisi parmi les ions portant au moins deux charges ioniques, les tensioactifs portant au moins une charge ionique, les oligomères et/ou polymères portant au moins deux charges ioniques, et/ou les particules minérales portant au moins deux charges ioniques. Il est précisé qu'il est possible de mettre en oeuvre un mélange de plusieurs composés ioniques.

Précisons que, dans ce qui va suivre, la charge ionique d'un composé comprenant une ou plusieurs charges signifie la charge nette de ce composé. La charge nette correspond à la différence entre le nombre de charges ioniques positives et le nombre de charges ioniques négatives (ou inversement), sachant que dans certains cas, le composé peut ne porter qu'un seul type de charge ionique.

Lorsque les blocs portant des charges ioniques du copolymère (A) sont des blocs anioniques, le composé (B) est choisi parmi les composés cationiques, à pHo.

Selon un premier mode de réalisation particulier de l'invention, le composé cationique est un ion portant au moins deux charges ioniques. De préférence, ledit cation est choisi parmi l'un au moins des éléments des colonnes IIA, IIIA, IB, IIB, IIIB, IVB, VIII de la classification périodique des éléments (parue au Bulletin de la société chimique de France - bulletin n°1 - janvier 1966), et les terres-rares.

Parmi les cations susceptibles d'entrer dans la composition selon l'invention, on peut citer par exemple l'aluminium, le calcium, le magnésium, le baryum, le cuivre, le cobalt, le zinc, le titane, le zirconium, le fer, le gallium, le lanthane, seuls ou en mélange.

Selon un deuxième mode de réalisation particulier de l'invention, le composé cationique est choisi parmi les tensioactifs présentant au moins une charge cationique, à pHo.

A titre d'exemple de tels tensioactifs, on peut citer :
les mono- ou poly- amines primaires, secondaires ou tertiaires, ou possédant un ou plusieurs groupement ammonium quaternaire, comprenant plus particulièrement 6 à 40 atomes de carbone, aliphatiques linéaires ou ramifiées, aromatiques, ainsi que celles comprenant éventuellement un ou plusieurs groupement(s) alcoxylé(s) (éthoxylés et/ou propoxylés.

A titre d'exemples, on peut citer l'hexylamine, l'octylamine, la dodécylamine, la stéarylamine, l'hexadécylamine, l'oléylamine, la diaminohexane, la diaminoheptane, la diaminododécane, benzoctamine, les halogénures d'alkyldialkylammonium ou d'alkyltrialkylammonium ou d'alkylbenzyldialkylammonium, comme le chlorure, le bromure de dodécyltriméthyl-ammonium, le chlorure, le bromure d'hexadécyl-triméthylammonium, le chlorure, le bromure de benzalkonium ;
- les sels de pipéridinium ;
- les imidazoles ;
- les amines hétérocycliques ;
seuls ou en mélange.

Il est à noter que l'on ne sortirait pas du cadre de la présente invention en mettant en oeuvre, seuls ou en combinaison avec les tensioactifs précités, un ou plusieurs tensioactifs amphotères qui à pHo, se trouvent sous une forme cationique, ou peuvent évoluer vers une telle forme. Il est rappelé qu'un tensioactif amphotère porte une charge anionique et/ou une charge cationique ; son degré d'ionisation variant en fonction du pH du milieu dans lequel il se trouve.

A titre d'exemples de tels tensioactifs, on peut citer notamment les bétaïnes, comme notamment la laurylbétaïne (Mirataine BB de la société Rhodia Chimie) ; les sulfo-bétaïnes; les amidoalkylbétaïnes, comme la cocoamidopropylbétaïne (Mirataine BDJ de la société Rhodia Chimie) ; les alkylampho-acétates ou -diacétates, comme les cocoamphoacétates et cocoamphodiacétates (Miranol C2M, Miranol Ultra C32 de la société Rhodia Chimie), les alkylampho -propionates ou -dipropionates, tels que le Miranol C2M SF de la société Rhodia Chimie, seuls ou en mélange.

Selon un troisième mode de réalisation particulier de l'invention, le composé cationique est choisi parmi les oligomères et/ou polymères comprenant au moins deux charges cationiques, à pHo. Il est à noter que le terme polymères couvre à la fois les homopolymères et les copolymères, qu'ils soient sous forme de bloc ou non.

De préférence, le composé cationique sous forme oligomère présente un degré de polymérisation d'au moins 2 et de préférence, inférieur ou égal à 10.

Par ailleurs, le composé sous forme polymère présente un degré de polymérisation supérieur à 10, plus particulièrement supérieur ou égal à 100, de préférence supérieur ou égal à 1000, et inférieur ou égal à 109.

Tous les monomères mentionnés à l'occasion de la description du bloc cationique du copolymère bloc (A) peuvent convenir pour le composé sous forme oligomère ou polymère du composé cationique considéré ici.

De plus, il n'est pas exclu de mettre en oeuvre des oligomères ou polymères, cationiques possédant en outre un ou plusieurs motifs non ioniques, dès l'instant que le polymère en question possède au moins deux charges cationiques à pHo. Il est à noter que la répartition des monomères dans l'oligomère ou polymère peut être de toute nature (alternée, statistique, bloc). On pourra se reporter à la liste de monomères non ioniques donnée auparavant.

Par ailleurs, il est possible de mettre en oeuvre un oligomère ou un polymère ampholyte, c'est-à-dire possédant un nombre et un type de charges ioniques tels que la charge ionique de l'oligomère ou du polymère soit d'au moins deux charges ioniques positives, à pH0.

Enfin, le composé (B) sous forme polymère peut être un latex, c'est-à-dire d'une dispersion de polymère dans une phase aqueuse, de préférence l'eau.

Selon une dernière possibilité, le composé cationique peut se trouver sous la forme de particules minérales choisies par exemple parmi des particules de dioxyde de titane ou de dioxyde de silicium, traité par des cations métalliques, comme notamment l'aluminium ou le zinc.

De préférence, ces particules présentent une taille moyenne inférieure ou égale à 10 µm, et de préférence comprise entre 20 nm et 1 µm.

Lorsque les blocs portant des charges ioniques, du copolymère bloc (A) sont des blocs cationiques, le composé est choisi parmi les composés anioniques.

Selon un premier mode de réalisation particulier de l'invention, le composé anionique est un ion portant au moins deux charges ioniques. De préférence, ledit anion est choisi parmi le sulfate, le carbonate, le phosphate.

On ne sortirait pas du cadre de la présente invention en mettant en oeuvre un ion organique portant au moins deux charges négatives. Par exemple, on peut citer les sels d'acides dicarboxyliques saturés ayant au plus 6 atomes de carbone, l'EDTA.

Selon un deuxième mode de réalisation particulier de l'invention, le composé anionique est choisi parmi les tensioactifs présentant au moins une charge anionique à pH0.

Plus particulièrement, les tensioactifs anioniques convenables peuvent être choisis parmi les tensioactifs suivants, seuls ou en mélange :
- les alkylesters sulfonates, par exemple de formule R-CH(SO₃M)-CH₂COOR', où R représente un radical hydrocarboné en C₈-C₂₀, de préférence en C₁₀-C₁₆, éventuellement porteur d'une ou plusieurs insaturations, R' un radical alkyle en C₁-C₆, de préférence en C₁-C₃ et M est un atome d'hydrogène, un cation alcalin (sodium, potassium, lithium) ou ammonium non substitué ou substitué (méthyl-, diméthyl-, triméthyl-, tétraméthylammonium, diméthyl pipéridinium ...) ou dérivé d'une alcanolamine (monoéthanolamine, diéthanolamine, triéthanolamine ...). On peut citer tout particulièrement les méthyl ester sulfonates dont le radical R est en C₁₄-C₁₆;
- les alkylesters sulfates, par exemple de formule R-CH(OSO₃M)-CH₂COOR', où R représente un radical hydrocarboné en C₈-C₂₀, de préférence en C₁₀-C₁₆, éventuellement porteur d'une ou plusieurs insaturations, R' un radical alkyle en C₁-C₆, de préférence en C₁-C₃ et M a la signification ci-dessus ;
- les alkylbenzènesulfonates, plus particulièrement en C₉-C₂₀, les alkylsulfonates primaires ou secondaires, notamment en C₈-C₂₂, les alkylglycérol sulfonates ;
- les alkylsulfates par exemple de formule ROSO₃M, où R représente un radical alkyle ou hydroxyalkyle en C₁₀-C₂₄, de préférence en C₁₂-C₂₀; M a la signification ci-dessus ;
- les alkyléthersulfates par exemple de formule RO(AO)ₙSO₃M où R représente un radical alkyle ou hydroxyalkyle en C₁₀-C₂₄, de préférence en C₁₂-C₂₀ ; OA représentant un groupement éthoxylé et/ou propoxylé ; M a la signification ci-dessus, n variant généralement de 1 à 4, comme par exemple le laurylethersulfate avecn=2;
- les alkylamides sulfates, par exemple de formule RCONHR'OSO₃M où R représente un radical alkyle en C₂-C₂₂, de préférence en C₆-C₂₀, R' un radical alkyle en C₂-C₃, M a la signification ci-dessus, ainsi que leurs dérivés polyalcoxylés (éthoxylés et/ou propoxylés) ;
- les sels d'acides gras saturés ou insaturés, par exemple comme ceux en C₈-C₂₄, de préférence en C₁₄-C₂₀ et d'un cation ayant la même définition que M, les N-acyl N-alkyltaurates, les alkyliséthionates, les alkylsuccinamates, les monoesters ou diesters de sulfosuccinates, les N-acyl sarcosinates, les polyéthoxy carboxylates ; et
- les alkyl- ou dialkyl- sulfosuccinates, par exemple comme ceux en C₆-C₂₄ ; le cation étant de même définition que M ; notamment les dioctylsulfosuccinate de sodium;
- les mono et di esters phosphates, par exemple de formule suivante : (RO)ₓ P(=O)(OM)ₓ ou R représente un radical alkyle, alkylaryle, arylalkyle, aryle, éventuellement polyalcoxylés, x et x' étant égaux à 1 ou 2, à la condition que la somme de x et x' soit égale à 3, M a la signification ci-dessus ; notamment dérivés des alcools gras polyalcoxylés, des di- et tri- (phényl-1 éthyl) phénols polyalcoxylés ; des alkylphénols polyalcoxylés ;
seuls ou en mélanges.

Il est à noter que l'on ne sortirait pas du cadre de la présente invention en mettant en oeuvre, seuls ou combinés aux tensioactifs précités, des tensioactifs amphotères qui, à pHo, se trouvent sous une forme anionique, ou peuvent évoluer vers une telle forme. Certains tensioactifs amphotères mentionnés auparavant peuvent convenir à ce mode de réalisation, comme notamment les bétaïnes, les amidoalkylbétaïnes ; les alkylamphoacétates et alkylamphodiacétates ; les alkylamphopropionates ou alkyl amphodipropionates, seuls ou en mélange.

Selon un troisième mode de réalisation particulier de l'invention, le composé anionique est choisi parmi les oligomères ou polymères comprenant au moins deux charges anioniques à pHo. Il est à noter que le terme polymères couvre à la fois les homopolymères et les copolymères, qu'ils soient sous forme de bloc ou non.

De préférence, le composé anionique sous forme oligomère, présente un degré de polymérisation d'au moins 2 et de préférence, inférieur ou égale à 10.

Par ailleurs, le composé anionique sous forme polymère présente un degré de polymérisation supérieur à 10, plus particulièrement supérieur ou égal à 100, de préférence supérieur ou égal à 1000, et inférieur ou égal à 109.

Tous les monomères mentionnés à l'occasion de la description des blocs anioniques du copolymère bloc (A) peuvent convenir pour le composé sous forme oligomère ou polymère du composé anionique considéré ici.

De plus, il n'est pas exclu de mettre en oeuvre des oligomères ou polymères, anioniques possédant en outre un ou plusieurs motifs non ioniques, dès l'instant que le polymère en question possède au moins deux charges nettes anioniques à pHo. Il est à noter que la répartition des monomères dans l'oligomère ou polymère peut être de toute nature (alternée, statistique, bloc). On pourra se reporter à la liste de monomères non ioniques donnée auparavant.

Par ailleurs, il est possible de mettre en oeuvre un oligomère ou un polymère ampholyte, c'est-à-dire possédant un nombre et un type de charges tels que la charge de l'oligomère ou du polymère soit d'au moins deux charges négatives, à pHo.

Enfin, le composé sous forme polymère peut être un latex, c'est-à-dire d'une dispersion de polymère dans une phase aqueuse, de préférence de l'eau.

Selon un dernier mode de réalisation de l'invention, le composé (B) peut être choisi parmi les particules minérales.

A titre d'exemple de telles particules, on peut citer notamment les particules de dioxyde de titane, de dioxyde de silicium, de dioxyde de cérium.

De préférence, ces particules présentent une taille moyenne inférieure ou égale à 10 µm, et de préférence comprise entre 20 nm et 1 µm.

Il est à noter que selon un mode de réalisation préféré de l'invention, le rapport molaire de la totalité des charges cationiques à la totalité des charges anioniques, dans la composition, à pHo est compris entre 0,001 et 1000, de préférence entre 0,01 et 100, plus particulièrement entre 0,1 et 10.

Par conséquent, la quantité en composé (B) sera calculée de manière à satisfaire le critère mentionné ci-dessus.

Comme indiqué auparavant, la composition selon l'invention est une composition aqueuse. De préférence, les éléments constitutifs de la composition sont mis en présence d'eau. Cependant, bien que cela ne soit pas préféré, on ne sortirait pas du cadre de la présente invention en utilisant un mélange eau/solvant ; ledit solvant étant choisi parmi les composés miscibles dans l'eau et solubilisant le copolymère bloc (A) et le composé (B). Comme solvant convenable, on peut citer les alcools comme le méthanol, l'éthanol.

Selon un mode de réalisation préféré de l'invention, la composition comprend au moins un copolymère (A) comprenant, à pH0, au moins deux blocs anioniques et au moins un bloc ne portant pas de charge ionique, avec au moins un composé cationique comprenant, selon sa nature, une ou plusieurs charges ioniques.

La composition selon l'invention peut être obtenue par tout moyen classique. De manière avantageuse, les divers éléments constitutifs sont mis en contact, en présence d'une phase aqueuse, de préférence d'eau.

De préférence, on mélange les divers éléments constitutifs alors qu'ils ont été préalablement solubilisés dans l'eau ou éventuellement dans un mélange eau/solvant.

La mise en contact a lieu avantageusement à une température comprise entre 15 et 35°C.

L'invention concerne de même l'utilisation de la composition qui vient d'être décrite, dans les domaines de l'exploitation de gisements de pétrole ou de gaz, de la détergence, de la cosmétique, le traitement du métal (transformation, déformation).

Enfin, un dernier objet de l'invention est constitué par des formulations comprenant ladite composition ; les formulations étant destinées aux domaines de l'exploitation de gisements de pétrole ou de gaz, de la détergence, de la cosmétique.

Des exemples concrets mais non limitatifs de l'invention vont maintenant être présentés.

### EXEMPLE 1:

Cet exemple a pour objet l'obtention de gels à partir de polymères blocs de structure étoile.

### 1/ Synthèse du polymère bloc étoile

### a) Synthèse du bras précurseur : PAA₅ₖ-PAM₆₀k-

Elle se déroule selon un procédé en discontinu, à 70°C, dans un réacteur à double enveloppe.

### - Première étape : synthèse du PAA₅ₖ-X

L'acide acrylique, l'eau, le S-éthylpropionyl O-éthyl xanthate et l'isopropanol sont introduits en pied de cuve, avec l'acide 4,4-azo-bis-4-cyanovalérique ou ACP (50% par rapport aux fonctions xanthates). Le mélange est ainsi chauffé pendant 6 heures à 70°C.

| Masse des réactifs introduits pour 100g de produit final | | | | |
|---|---|---|---|---|
| Acide acrylique | Eau | Xanthate | Isopropanol | ACP |
| 7,7 g | 16,7 g | 0,32 g | 2,5 g | 0,2158 g |

### - Seconde étape : synthèse du PAA₅ₖ-PAM₆₀ₖ-X

L'acrylamide, dissous dans l'eau et l'ACP (50% par rapport aux fonctions xanthates) sont rajoutés au mélange précédent qui est à nouveau chauffé pendant 6 heures à 70°C.

| Masse des réactifs introduits | | |
|---|---|---|
| Acrylamide | Eau | ACP |
| 92,3 g | 215,8 g | 0,2158 g |

L'extrait sec de la solution finale est de 34%.

Le copolymère est solubilisé dans un mélange Eau /IPA, il est utilisé sous cette forme lors des étapes suivantes.

### b) Synthèse du polymère en étoile : PAA₅ₖ-_{P}AM₆₀ₖ-MBA-X

Dans un ballon muni d'un réfrigérant, le bras précurseur synthétisé précédemment, le MBA (méthylène bisacrylamide), l'eau, l'isopropanol, l'ACP et l'acétone sont rajoutés au mélange initial.

L'ensemble est chauffé à 80°C pendant 4 heures.

| Masse des réactifs introduits | | | |
|---|---|---|---|
| PAA₅ₖ-PAM₆₀ₖ-X | Eau | MBA(*) | ACP (**) |
| 28,60 g | 50,54 g | 5,93 g | 0,32 g |

| | | | |
|---|---|---|---|
| (*) MBA en solution à 4% dans un mélange eau/Acétone (9/1) (**) ACP en solution à 5% dans l'acétone | | | |

L'extrait sec de la solution obtenue est de 10%.

### 2/ Formation d'un gel à partir d'un polymère bloc de structure étoile

La solution de polymère bloc de structure en étoile obtenue précédemment est neutralisée par de la soude (1 équivalent par groupement acide), puis diluée avec de l'eau pour obtenir un extrait sec final en poids de 6%.

| Masse des réactifs introduits | | |
|---|---|---|
| Polymère (*) | NaOH (1 mol.l⁻¹) | Eau |
| 10,013 g | 1,102 g | 8,903 g |

| | | |
|---|---|---|
| (*) Solution à 12% du polymère bloc en étoile | | |

Cette solution à 6% est ensuite mélangée avec une solution aqueuse de polymère cationique : Glokill PQ (produit RHODIA) de telle sorte que le rapport molaire de la totalité des charges cationiques sur la totalité des charges anioniques, Z=[-]/[+] égale 1.

L'ensemble est enfin dilué avec de l'eau de façon à obtenir une solution finale à 3% de polymère en étoile.

| Masse des réactifs introduits | | |
|---|---|---|
| Polymère (*) | Glokill (**) | Eau |
| 3g | 0,277 g | 2,7 g |

| | | |
|---|---|---|
| (*) Solution à 3% du polymère en étoile neutralisée par la soude (**) Solution aqueuse de Glokill à 54,6g/l. | | |

L'ensemble est agité avec un barreau aimanté. Le gel se forme immédiatement.

### 3/ Analyse rhéologique du gel électrostatique

Le gel ainsi obtenu est analysé avec l'appareil Carrimed CSL 100.

La viscosité du gel est 3 fois supérieure à la viscosité des composés seuls dans les mêmes conditions de température (25°C), de pH et de concentration (ci-dessus).

La contrainte en déformation est imposée à 10%, les modules élastiques G' et de perte G" sont mesurés lors du balayage en fréquence de 0,3 à 30 Hz. Les données sont regroupées dans le tableau ci-dessous.

| **Fréquence (Hz)** | **G' (Pa)** | **G" (Pa)** |
|---|---|---|
| 0,3001 | 141,8 | 19.8 |
| 0,3824 | 144,3 | 19,38 |
| 0,4875 | 147,1 | 19,42 |
| 0,6203 | 149,9 | 19,64 |
| 0,7906 | 152,8 | 19,95 |
| 1,007 | 155,7 | 20,36 |
| 1,282 | 158,7 | 20,79 |
| 1,641 | 161,9 | 21,27 |
| 2,09 | 165,1 | 21,73 |
| 2,654 | 168,2 | 22,26 |
| 3,391 | 171,7 | 22,75 |
| 4,329 | 175,1 | 23,34 |
| 5,499 | 178,5 | 23,87 |
| 7,016 | 182,2 | 24,37 |
| 8,91 | 185,8 | 24,82 |
| 11,41 | 191,4 | 25,12 |
| 14,53 | 195,6 | 25,61 |
| 18,5 | 200,1 | 25,26 |
| 23,48 | 204,8 | 23,59 |
| 30,14 | 209,8 | 15,96 |

## Revendications

1. Composition aqueuse associant au moins un copolymère bloc (A) comprenant, à un pH de la composition donné, pHo, compris entre 1 et 14, au moins deux blocs portant au moins deux charges ioniques de même nature et au moins un bloc ne portant pas de charge ionique, avec au moins un composé (B) portant une ou plusieurs charges ioniques de charge opposée à celle desdits blocs dans les mêmes conditions de pH ; le composé (B) étant -choisi parmi les ions portant au moins deux charges ioniques, les tensioactifs portant au moins une charge ionique, les oligomères et/ou polymères portant au moins deux charges ioniques et/ou les particules minérales portant au moins deux charges ioniques ; et ledit composé B étant choisi à pHo parmi :
les composés cationiques lorsque les blocs portant au moins deux charges ioniques du copolymère bloc (A) sont anioniques.
les composés anioniques lorsque les blocs portant au moins deux charges ioniques du copolymère bloc (A) sont cationiques,
la teneur en copolymère bloc (A) étant telle que la viscosité de la composition est supérieure à trois fois, de préférence supérieure ou égale à dix fois, celle d'une solution aqueuse de copolymère bloc (A) et à celle d'une solution aqueuse du composé (B), à pHo et dans les mêmes conditions de température et de concentration.

2. Composition selon la revendication précédente, **caractérisée en ce qu'**elle se présente sous la forme d'un gel.

3. Composition selon l'une des revendications précédentes, **caractérisée en ce que** le copolymère bloc (A) est choisi parmi les copolymères linéaires, des copolymères de structure peigne, de structure étoile, les copolymères dendritiques ou hyperbranchés.

4. Composition selon l'une des revendications précédentes, **caractérisée en ce que** les blocs portant au moins deux charges ioniques du copolymère bloc (A) sont des blocs anioniques à pHo.

5. Composition selon la revendication précédente, **caractérisée en ce que** les blocs anioniques du copolymère bloc (A) sont obtenus à partir d'au moins un monomère portant au moins une fonction carboxylique, sulfonique, sulfurique, phosphonique, phosphorique, sulfosuccinique, les sels correspondants, ou les précurseurs correspondants.

6. Composition selon l'une des revendications 4 ou 5, **caractérisée en ce que** les blocs anioniques du copolymère bloc (A) sont obtenus à partir d'au moins un monomère choisi parmi : -les acides mono-ou poly-carboxyliques linéaires, ramifiés, cycliques ou aromatiques, les dérivés N-substitués de tels acides, les monoesters d'acides polycarboxyliques, comprenant au moins une insaturation éthylénique ; -les acides vinyl carboxyliques linéaires, ramifiés, cycliques ou aromatiques ; -les aminoacides comprenant, comprenant au moins une insaturation éthylénique, les N-carboxy anhydride d'aminoacides ; seuls ou en mélanges, leurs dérivés sulfoniques ou phosphoniques, les macromonomères dérivant de tels monomères, les sels ou les précurseurs de ces monomères.

7. Composition selon l'une des revendications 1 à 3, **caractérisée en ce que** les blocs portant au moins deux charges ioniques du copolymère bloc (A) sont des blocs cationiques à pHo.

8. Composition selon la revendication précédente, **caractérisée en ce que** les blocs cationiques du copolymère bloc (A) sont obtenus à partir d'au moins un monomère choisi parmi :
- les (méth) acrylates d'aminoalkyle, les (méth) acrylamides d'aminoalkyle ;
- les monomères comprenant au moins une fonction amine secondaire, tertiaire ou quaternaire, ou un groupe hétérocyclique contenant un atome d'azote, la vinylamine, l'éthylène imine ;
- les sels d'ammonium de diallyldialkyl ;
seuls ou en mélanges, leurs sels, ainsi que les macromonomères dérivant de tels monomères , lesdits monomères pouvant présenter un contre-ion choisi parmi les halogènes, comme le chlore, les sulfates, les hydrosulfates, les alkylsulfates, les phosphates, les citrates, les formates, les acétates.

9. Composition selon l'une des revendications précédentes, **caractérisée en ce que** le ou les blocs du copolymère bloc (A) ne portant pas de charge ionique sont obtenus à partir d'au moins un monomère non ionique choisi parmi :
- l'oxyde d'éthylène, l'oxyde de propylène, l'oxyde de butylène,
- les esters des acides mono-ou poly-carboxyliques, linéaires, ramifiées, cycliques ou aromatiques, comprenant au moins une insaturation éthylénique,
- les amides des acides mono-ou poly-carboxyliques, linéaires, ramifiés, cycliques ou aromatiques, comprenant au moins une insaturation éthylénique, les nitriles αβ-insaturés, la N-vinylpyrrolidone, les éthers vinyliques, les esters vinyliques, les monomères vinylaromatiques, les halogénures de vinyle ou de vinylidène, les amides de vinylamine,
- les monomères hydrocarbonés, linéaires ou ramifiés, comprenant au moins une double liaison carbone-carbone,
seuls ou en mélanges, ainsi que les macromonomères dérivant de tels monomères.

10. Composition selon l'une des revendications précédentes, **caractérisée en ce que** le ou les blocs du copolymère bloc (A) ne portant pas de charge ionique, sont hydrosolubles.

11. Composition selon l'une des revendications précédentes, **caractérisée en ce que** chacun des blocs ne portant pas de charge ionique du copolymère bloc (A) présente une masse molaire en poids au moins trois fois supérieure à celle de l'un au moins des blocs portant au moins deux charges ioniques dudit copolymère bloc (A).

12. Composition selon l'une des revendications précédentes, **caractérisée en ce que** la proportion de motifs hydrophiles dans au moins l'un des blocs du copolymère bloc (A) ne portant pas de charge ionique, est d'au moins 70 % en moles, de préférence au moins 90 % en moles, par rapport au nombre total de moles de motifs dudit bloc ne portant pas de charge ionique.

13. Composition selon l'une des revendications précédentes, **caractérisée en ce que** la teneur en copolymère bloc (A) est comprise entre 0,001 à 30% en poids de la composition, de préférence comprise entre 0,01 et 5% en poids de la composition.

14. Composition selon l'une des revendications précédentes, **caractérisée en ce que** le copolymère bloc (A) est associé à au moins un copolymère dibloc, qui, à pHo, comprend un bloc portant au moins une charge ionique de même nature que celle des blocs portant au moins deux charges ioniques du copolymère (A) et un bloc ne portant pas de charge ionique.

15. Composition selon l'une des revendications précédentes, **caractérisée en ce que** la quantité de copolymère dibloc, exprimée en pourcentage en poids, rapportée à la somme du copolymère bloc (A) précité et du copolymère dibloc, représente 50 à 99,9 %, de préférence entre 80 et 99% en poids, lorsque le copolymère bloc (A) est linéaire , ou représente de 0 exclu à 99 %, avantageusement de 0 exclu à 60 %, lorsque le copolymère bloc (A) est de structure peigne, ramifiée, étoile ou dendrimère.

16. Composition selon l'une des revendications précédentes, **caractérisée en ce que** le composé cationique est un ion portant au moins deux charges, choisi parmi l'un au moins des éléments des colonnes IIA, IIIA, IB, IIB, IIIB. IVB, VIII de la classification périodique des éléments.

17. Composition selon la revendication 16, **caractérisée en ce que** le composé cationique est choisi parmi :
- les tensioactifs présentant au moins une charge cationique, à pHo, suivants :
- les mono-ou poly-amines primaires, secondaires ou tertiaires, ou possédant un ou plusieurs groupement ammonium quaternaire, aliphatiques linéaires ou ramifiés. aromatiques, ainsi que celles comprenant éventuellement un ou plusieurs groupement (s) alcoxylé (s);
- les sels de pipéridinium ;
- les imidazoles ;
- les amines hétérocycliques ;
seuls ou en mélange ;
- et/ou parmi les tensioactifs amphotères choisis parmi les bétaïnes ; les sulfo-bétaïnes ; les alkylampho-acétates ou-diacétates ; les alkylampho-propionates ou -dipropionates, seuls ou en mélanges.

18. Composition selon l'une des revendications 16 ou à 178, **caractérisée en ce que** le composé (B) est choisi parmi des particules minérales cationiques comme les particules de dioxyde de titane ou de dioxyde de silicium traité par des cations métalliques.

19. Composition selon l'une des revendications 1 à 3 et 7 à 15, **caractérisée en ce que** le composé anionique est un ion portant au moins deux charges anioniques, choisi parmi le sulfate, le carbonate, le phosphate, ou leurs mélanges ; ou un ion organique choisi parmi les sels d'acides dicarboxyliques saturés ayant au plus 6 atomes de carbone.

20. Composition selon la revendications 19, **caractérisée en ce que** le composé anionique est choisi parmi :
- les tensioactifs suivants, seuls ou en mélanges, présentant au moins une charge anionique, pHo:
- les alkylesters sulfonates, les alkylbenzènesulfonates, les alkylsulfonates primaires ou secondaires, les alkylglycérol sulfonates, les acides polycarboxyliques sulfonés,
- les alkylsulfates, les sulfates d'alkylglycosides, les alkylamides sulfatés,
- les alkylphosphates,
- les sels d'acides gras saturés ou insaturés, les sulfonates de paraffine, les N-acyl N-alkyltaurates, les iséthionates, les alkylsuccinamates, les N-acyl sarcosiriates,
- les alkylsulfosuccinates, les monoesters ou diesters de sulfosuccinates,
- les polyéthoxycarboxylates,
seuls ou en mélanges ;
- et/ou parmi les tensioactifs amphotères choisis parmi les bétaïnes ; les alkylamphoacétates ou-diacétates ; les alkylampho-propionates ou-dipropionates, seuls ou en mélanges.

21. Composition selon l'une des revendications 19 ou 20, **caractérisée en ce que** le composé (B) est choisi parmi des particules minérales comme les particules de dioxyde de titane, de dioxyde de silicium, de dioxyde de cérium.

22. Composition selon l'une des revendications précédentes, **caractérisée en ce que** le rapport molaire de la totalité des charges cationiques sur la totalité des charges anioniques, dans la composition, à pHo, est compris entre 0,001 et 1000, de préférence entre 0,01 et 100, plus particulièrement entre 0,1 et 10.

23. Utilisation de la composition selon l'une des revendications précédentes dans les domaines de l'exploitation de gisements de pétrole ou de gaz, de la détergence, de la cosmétique.

24. Formulations comprenant la composition selon l'une des revendications 1 à 24, destinées aux domaines de l'exploitation de gisements de pétrole ou de gaz, de la détergence, de la cosmétique.

## Claims

1. Aqueous composition combining at least one block copolymer (A) comprising, at a given pH of the composition, pHo, between 1 and 14, at least two blocks bearing at least two ionic charges of the same nature and at least one block bearing no ionic charge, with at least one compound (B) bearing one or more ionic charges having a charge opposite to that of said blocks under the same pH conditions; the compound (B) being chosen from ions bearing at least two ionic charges, surfactants bearing at least one ionic charge, oligomers and/or polymers bearing at least two ionic charges and/or mineral particles bearing at least two ionic charges; and said compound B being chosen, at pHo, from:
cationic compounds when the blocks bearing at least two ionic charges of the block copolymer (A) are anionic,
anionic compounds when the blocks bearing at least two ionic charges of the block copolymer (A) are cationic,
the block copolymer (A) content being such that the viscosity of the composition is greater than three times, preferably greater than or equal to ten times, that of an aqueous solution of block copolymer (A) and that of an aqueous solution of compound (B), at pHo and under the same temperature and concentration conditions.

2. Composition according to the preceding claim, **characterized in that** it is in the form of a gel.

3. Composition according to either of the preceding claims, **characterized in that** the block copolymer (A) is chosen from linear copolymers, copolymers having a comb structure or a star structure, dendritic copolymers or hyperbranched copolymers.

4. Composition according to one of the preceding claims, **characterized in that** the blocks bearing at least two ionic charges of the block copolymer (A) are anionic blocks at pHo.

5. Composition according to the preceding claim, **characterized in that** the anionic blocks of the block copolymer (A) are obtained from at least one monomer bearing at least one carboxylic, sulphonic, sulphuric, phosphonic, phosphoric or sulphosuccinic function, the corresponding salts, or the corresponding precursors.

6. Composition according to either of Claims 4 and 5, **characterized in that** the anionic blocks of the block copolymer (A) are obtained from at least one monomer chosen from:
linear, branched, cyclic or aromatic monocarboxylic or polycarboxylic acids, N-substituted derivatives of such acids, monoesters of polycarboxylic acids, comprising at least one ethylenically unsaturated group, linear, branched, cyclic or aromatic vinyl carboxylic acids; amino acids comprising at least one ethylenically unsaturated group, N-carboxy anhydride amino acids; alone or as mixtures, sulphonic or phosphonic derivatives thereof, macromonomers deriving from such monomers and the salts or precursors of these monomers.

7. Composition according to one of Claims 1 to 3, **characterized in that** the blocks bearing at least two ionic charges of the block copolymer (A) are cationic blocks at pHo.

8. Composition according to the preceding claim, **characterized in that** the cationic blocks of the block copolymer (A) are obtained from at least one monomer chosen from:
- aminoalkyl (meth)acrylates, aminoalkyl (meth)-acrylamides;
- monomers comprising at least one secondary, tertiary or quaternary amine function, or a heterocyclic group containing a nitrogen atom, vinylamine, ethylenimine;
- diallyldialkyl ammonium salts;
alone or as mixtures, salts thereof, and also macromonomers deriving from such monomers; it being possible for said monomers to have a counterion chosen from halogens, such as chlorine, sulphates, hydrosulphates, alkylsulphates, phosphates, citrates, formates and acetates.

9. Composition according to one of the preceding claims, **characterized in that** the block(s) of the block copolymer (A) bearing no ionic charge are obtained from at least one non-ionic monomer chosen from:
- ethylene oxide, propylene oxide, butylene oxide,
- esters of linear, branched, cyclic or aromatic monocarboxylic or polycarboxylic acids, comprising at least one ethylenically unsaturated group,
- amides of linear, branched, cyclic or aromatic monocarboxylic or polycarboxylic acids comprising at least one ethylenically unsaturated group, α,β-unsaturated nitriles, N-vinylpyrrolidone, vinyl ethers, vinyl esters, vinylaromatic monomers, vinyl or vinylidene halides, vinylamine amides,
- linear or branched hydrocarbon-based monomers comprising at least one carbon-carbon double bond, alone or as mixtures, and also macromonomers deriving from such monomers.

10. Composition according to one of the preceding claims, **characterized in that** the block(s) of the block copolymer (A) bearing no ionic charge are watersoluble.

11. Composition according to one of the preceding claims, **characterized in that** each of the blocks bearing no ionic charge of the block copolymer (A) has a weight-average molecular weight at least three times greater than that of at least one of the blocks bearing at least two ionic charges of said block copolymer (A).

12. Composition according to one of the preceding claims, **characterized in that** the proportion of hydrophilic units in at least one of the blocks of the block copolymer (A) bearing no ionic charge is at least 70 mol%, preferably at least 90 mol%, relative to the total number of moles of units of said block bearing no ionic charge.

13. Composition according to one of the preceding claims, **characterized in that** the content of block copolymer (A) is between 0.001 and 30% by weight of the composition, preferably between 0.01 and 5% by weight of the composition.

14. Composition according to one of the preceding claims, **characterized in that** the block copolymer (A) is combined with at least one diblock copolymer, which, at pHo, comprises a block bearing at least one ionic charge of the same nature as that of the blocks bearing at least two ionic charges of the copolymer (A) and a block bearing no ionic charge.

15. Composition according to one of the preceding claims, **characterized in that** the amount of diblock copolymer, expressed as a percentage by weight, relative to the sum of the aforementioned block copolymer (A) and of the diblock copolymer, represents 50 to 99.9%, preferably between 80 and 99% by weight, when the block copolymer (A) is linear; or represents from 0, not included, to 99%, advantageously from 0, not included, to 60%, when the block copolymer (A) has a comb, branched, star or dendrimer structure.

16. Composition according to one of the preceding claims, **characterized in that** the cationic compound is an ion bearing at least two charges, chosen from at least one of the elements of columns IIA, IIIA, IB, IIB, IIIB, IVB and VIII of the Periodic Table of the Elements.

17. Composition according to Claim 16, **characterized in that** the cationic compound is chosen from:
- the surfactants having at least one cationic charge, at pHo, below:
- primary, secondary or tertiary mono- or polyamines, or those having one or more linear or branched aliphatic, or aromatic, quaternary ammonium groups, and also those optionally comprising one or more alkoxylated group(s);
- piperidinium salts;
- imidazoles;
- heterocyclic amines;
alone or as a mixture;
- and/or from amphoteric surfactants chosen from betaines; sulphobetaines; alkylamphoacetates or alkylamphodiacetates; alkylamphopropionates or alkylamphodipropionates, alone or as mixtures.

18. Composition according to either of Claims 16 and 17, **characterized in that** the compound (B) is chosen from cationic mineral particles such as particles of titanium dioxide or of silicon dioxide treated with metal cations.

19. Composition according to one of Claims 1 to 3 and 7 to 15, **characterized in that** the anionic compound is an ion bearing at least two anionic charges, chosen from sulphate, carbonate, phosphate, or mixtures thereof; or an organic ion chosen from among the salts of saturated dicarboxylic acids having at most 6 carbon atoms.

20. Composition according to Claim 19, **characterized in that** the anionic compound is chosen from:
- the following surfactants, alone or as mixtures, having at least one anionic charge, at pHo:
- alkylester sulphonates, alkylbenzene sulphonates, primary or secondary alkyl sulphonates, alkylglycerol sulphonates, sulphonated polycarboxylic acids,
- alkyl sulphates, alkylglycoside sulphates, sulphated alkylamides,
- alkyl phosphates,
- salts of unsaturated or saturated fatty acids, paraffin sulphonates, N-acyl N-alkyl taurates, isethionates, alkyl succinamates, N-acyl sarcosinates,
- alkyl sulfosuccinates, monoesters or diesters of sulfosuccinates,
- polyethoxycarboxylates,
alone or as mixtures;
- and/or from amphoteric surfactants chosen from betaines; alkylamphoacetates or alkylamphodiacetates; alkylamphopropioriates or alkylamphodipropionates, alone or as mixtures.

21. Composition according to either of Claims 19 and 20, **characterized in that** the compound (B) is chosen from mineral particles such as particles of titanium dioxide, of silicon dioxide or of cerium dioxide.

22. Composition according to one of the preceding claims, **characterized in that** the molar ratio of all of the cationic charges to all of the anionic charges, in the composition, at pHo, is between 0.001 and 1000, preferably between 0.01 and 100, more particularly between 0.1 and 10.

23. Use of the composition according to one of the preceding claims, in the fields of the exploitation of oil fields or gas deposits, detergency or cosmetics.

24. Formulations containing the composition according to one of Claims 1 to 22, intended for the fields of the exploitation of oil fields or gas deposits, detergency or cosmetics.

## Patentansprüche

1. Wässrige Zusammensetzung, in der mindestens ein Blockcopolymer (A), welches bei einem gegebenen pH-Wert pHo der Zusammensetzung, der im Bereich von 1 bis 14 liegt, mindestens zwei Blöcke, die mindestens zwei gleichartige ionische Ladungen tragen, und mindestens einen Block ohne ionische Ladung umfasst, gemeinsam mit mindestens einer Verbindung (B), welche unter denselben pH-Bedingungen eine oder mehrere ionische Ladungen trägt, die der Ladung der Blöcke entgegengesetzt sind, vorliegt; wobei die Verbindung (B) aus den Ionen, welche mindestens zwei ionische Ladungen tragen, den grenzflächenaktiven Stoffen, die mindestens eine ionische Ladung tragen, den Oligomeren und/oder Polymeren, welche mindestens zwei ionische Ladungen tragen, und/oder den Mineralpartikeln, die mindestens zwei ionische Ladungen tragen, ausgewählt ist; und wobei die Verbindung B bei pHo aus Folgendem ausgewählt ist:
den kationischen Verbindungen, wenn die Blöcke des Blockcopolymers (A), welche mindestens zwei ionische Ladungen tragen, anionisch sind,
den anionischen Verbindungen, wenn die Blöcke des Blockcopolymers (A), welche mindestens zwei ionische Ladungen tragen, kationisch sind,
wobei der Gehalt an Blockcopolymer (A) derart ist, dass die Viskosität der Zusammensetzung dreimal höher, vorzugsweise mindestens zehnmal höher, als diejenige einer wässrigen Lösung von Blockcopolymer (A) und als diejenige einer wässrigen Lösung der Verbindung (B), bei pHo und unter denselben Temperatur- und Konzentrationsbedingungen, ist.

2. Zusammensetzung nach dem vorhergehenden Anspruch, **dadurch gekennzeichnet, dass** sie in Form eines Gels vorliegt.

3. Zusammensetzung nach einem der vorhergehenden Ansprüche, **dadurch gekennzeichnet, dass** das Blockcopolymer (A) aus den geradkettigen Copolymeren, den Copolymeren mit Kammstruktur, mit Sternstruktur, den dentritischen oder den hochverzweigten Copolymeren ausgewählt ist.

4. Zusammensetzung nach einem der vorhergehenden Ansprüche, **dadurch gekennzeichnet, dass** die Blöcke des Blockcopolymers (A), welche mindestens zwei ionische Ladungen tragen, bei pHo anionische Blöcke sind.

5. Zusammensetzung nach dem vorhergehenden Anspruch, **dadurch gekennzeichnet, dass** die anionischen Blöcke des Blockcopolymers (A) ausgehend von mindestens einem Monomer, welches mindestens eine Carbonsäure-, Sulfonsäure-, Schwefelsäure-, Phosphonsäure-, Phosphorsäure-, Sulfobernsteinsäurefunktion trägt, den entsprechenden Salzen oder den entsprechenden Vorläuferstoffen, erhalten werden.

6. Zusammensetzung nach einem der Ansprüche 4 oder 5, **dadurch gekennzeichnet, dass** die anionischen Blöcke des Blockcopolymers (A) ausgehend von mindestens einem Monomer erhalten werden, welches aus Folgendem ausgewählt ist: - den geradkettigen, verzweigten, cyclischen oder aromatischen Mono- oder Polycarbonsäuren, den N-substituierten Derivaten derartiger Säuren, den Monoestern von Polycarbonsäuren, die mindestens eine ethylenisch ungesättigte Stelle umfassen; - den geradkettigen, verzweigten, cyclischen oder aromatischen Vinylcarbonsäuren; - den Aminosäuren, die mindestens eine ethylenisch ungesättigte Stelle umfassen, den N-Carboxyanhydriden von Aminosäuren; einzeln oder in Mischungen, deren Sulfonsäure- und Phosphonsäurederivaten, den Makromonomeren, die sich von derartigen Monomeren ableiten, den Salzen oder Vorläuferstoffen dieser Monomere.

7. Zusammensetzung nach einem der Ansprüche 1 bis 3, **dadurch gekennzeichnet, dass** die Blöcke des Blockcopolymers (A), welche mindestens zwei ionische Ladungen tragen, bei pHo kationische Blöcke sind.

8. Zusammensetzung nach dem vorhergehenden Anspruch, **dadurch gekennzeichnet, dass** die kationischen Blöcke des Blockcopolymers (A) ausgehend von mindestens einem Monomer erhalten werden, welches aus Folgendem ausgewählt ist:
- den Aminoalkyl(meth)acrylaten, den Aminoalkyl(meth)acrylamiden;
- den Monomeren, die mindestens eine sekundäre, tertiäre oder quaternäre Aminofunktion oder eine heterozyklische Gruppe, welche ein Stickstoffatom enthält, umfassen, Vinylamin, Ethylenimin;
- den Diallyldialkylammoniumsalzen;
einzeln oder in Mischungen, ihren Salzen, sowie den Makromonomeren, die sich von derartigen Monomeren ableiten; wobei die Monomere ein Gegenion aufweisen können, das aus den Halogenen wie etwa Chlor, den Sulfaten, den Hydrogensulfaten, den Alkylsulfaten, den Phosphaten, den Citraten, den Formiaten, den Acetaten ausgewählt ist.

9. Zusammensetzung nach einem der vorhergehenden Ansprüche, **dadurch gekennzeichnet, dass** der oder die Blöcke des Blockcopolymers (A), welche keine ionische Ladung tragen, ausgehend von mindestens einem nichtionischen Monomer erhalten werden, das aus Folgendem ausgewählt ist:
- Ethylenoxid, Propylenoxid, Butylenoxid,
- den Estern geradkettiger, verzweigter, cyclischer oder aromatischer Mono- und Polycarbonsäuren, die mindestens eine ethylenisch ungesättigte Stelle umfassen,
- den Amiden geradkettiger, verzweigter, cyclischer oder aromatischer Mono- und Polycarbonsäuren, die mindestens eine ethylenisch ungesättigte Stelle umfassen, den αβ-ungesättigten Nitrilen, N-Vinylpyrrolidon, den Vinylethern, den Vinylestern, den vinylaromatischen Monomeren, den Vinyl- oder Vinylidenhalogeniden, den Vinylaminamiden,
- den geradkettigen oder verzweigten Kohlenwasserstoffmonomeren, die mindestens eine Kohlenstoff-Kohlenstoff-Doppelbindung umfassen,
einzeln oder in Mischung, sowie den Makromonomeren, die sich von derartigen Monomeren ableiten.

10. Zusammensetzung nach einem der vorhergehenden Ansprüche, **dadurch gekennzeichnet, dass** der oder die Blöcke des Blockcopolymers (A), welche keine ionische Ladung tragen, wasserlöslich sind.

11. Zusammensetzung nach einem der vorhergehenden Ansprüche, **dadurch gekennzeichnet, dass** jeder der Blöcke des Blockcopolymers (A), welche keine ionische Ladung tragen, eine Molmasse nach Gewicht aufweist, die mindestens dreimal höher als diejenige mindestens eines der Blöcke des Blockcopolymers (A) ist, welche mindestens zwei ionische Ladungen tragen.

12. Zusammensetzung nach einem der vorhergehenden Ansprüche, **dadurch gekennzeichnet, dass** der Anteil der hydrophilen Bausteine in mindestens einem der Blöcke des Blockcopolymers (A), welche keine ionische Ladung tragen, mindestens 70 mol%, vorzugsweise mindestens 90 mol%, beträgt, bezogen auf die Gesamtmolzahl der Bausteine des Blocks ohne ionische Ladung.

13. Zusammensetzung nach einem der vorhergehenden Ansprüche, **dadurch gekennzeichnet, dass** der Gehalt an Blockcopolymer (A) im Bereich von 0,001 bis 30 Gewichts% der Zusammensetzung, vorzugsweise im Bereich von 0,01 bis 5 Gewichts% der Zusammensetzung, liegt.

14. Zusammensetzung nach einem der vorhergehenden Ansprüche, **dadurch gekennzeichnet, dass** das Blockcopolymer (A) gemeinsam mit mindestens einem Diblockcopolymer vorliegt, welches, bei pHo, einen Block, der mindestens eine ionische Ladung trägt, welche von derselben Beschaffenheit wie diejenige der Blöcke des Copolymers (A) ist, welche mindestens zwei ionische Ladungen tragen, sowie einen Block ohne ionische Ladung umfasst.

15. Zusammensetzung nach einem der vorhergehenden Ansprüche, **dadurch gekennzeichnet, dass** die Menge an Diblockcopolymer, ausgedrückt in Gewichtsprozent, bezogen auf die Summe aus dem vorstehend genannten Blockcopolymer (A) und dem Diblockcopolymer, 50 bis 99,9 %, vorzugsweise 80 bis 99 Gewichts% ausmacht, wenn das Blockcopolymer (A) geradkettig ist; oder mehr als 0 bis 99 %, vorteilhafterweise mehr als 0 bis 60 % ausmacht, wenn das Blockcopolymer (A) einen kammartigen, verzweigten, sternförmigen oder dendrimeren Aufbau zeigt.

16. Zusammensetzung nach einem der vorhergehenden Ansprüche, **dadurch gekennzeichnet, dass** die kationische Verbindung ein Ion ist, welches mindestens zwei Ladungen trägt, ausgewählt aus mindestens einem der Elemente der Spalten IIA, IIIA, IB, IIB, IIIB, IVB, VIII des Periodensystems der Elemente.

17. Zusammensetzung nach Anspruch 16, **dadurch gekennzeichnet, dass** die kationische Verbindung aus Folgendem ausgewählt ist:
- den folgenden grenzflächenaktiven Stoffen, die bei pHo mindestens eine kationische Ladung aufweisen:
- Mono- oder Polyamine, die primär, sekundär oder tertiär sind oder aber eine oder mehrere quarternär Ammoniumgruppen besitzen, die aliphatisch geradkettig oder verzweigt, aromatisch sind, sowie solche, die möglicherweise eine oder mehrere alkoxylierte Gruppe(n) umfassen.
- Piperidiniumsalze;
- Imidazole;
- heterocyclische Amine;
einzeln oder in Mischung;
- und/oder aus den amphoteren grenzflächenaktiven Stoffen, die aus den Betainen; den Sulfobetainen; den Alkylamphoacetaten oder -diacetaten; den Alkylamphopropionaten oder -dipropionaten, einzeln oder in Mischungen, ausgewählt sind.

18. Zusammensetzung nach einem der Ansprüche 16 bis 17, **dadurch gekennzeichnet, dass** die Verbindung (B) aus den kationischen mineralischen Partikeln wie den Titandioxid- oder Siliciumdioxidpartikeln, nach Behandlung mit Metallkationen, ausgewählt ist.

19. Zusammensetzung nach einem der Ansprüche 1 bis 3 und 7 bis 15, **dadurch gekennzeichnet, dass** die anionische Verbindung ein Ion ist, welches mindestens zwei anionische Ladungen trägt und aus Sulfat, Carbonat, Phosphat oder deren Mischungen ausgewählt ist; oder ein organisches Ion, welches aus den Salzen gesättigter Dicarbonsäuren mit höchstens 6 Kohlenstoffatomen ausgewählt ist.

20. Zusammensetzung nach Anspruch 19, **dadurch gekennzeichnet, dass** die anionische Verbindung aus Folgendem ausgewählt ist:
- den folgenden grenzflächenaktiven Stoffen, einzeln oder in Mischungen, die bei pHo mindestens eine anionische Ladung aufweisen:
- Alkylestersulfonate, Alkylbenzolsulfonate, primäre oder sekundäre Alkylsulfonate, Alkylglycerinsulfonate, Polycarbonsäuren mit Sulfonsäuregruppen,
- Alkylsulfate, Alkylglycosidsulfate, Alkylamide mit Sulfatgruppen,
- Alkylphosphate,
- Salze gesättigter oder ungesättigter Fettsäuren, Paraffinsulfonate, N-Acyl-N-alkyltaurate, Isethionate, Alkylsuccinamate, N-Acylsarcosinate,
- Alkylsulfobernsteinsäureester, Monoester oder Diester von Sulfobernsteinsäureestern,
- Polyethoxycarbonsäuren,
einzeln oder in Mischungen;
- und/oder aus den amphoteren grenzflächenaktiven Stoffen, die aus den Betainen; den Alkylamphoacetaten oder -diacetaten; den Alkylamphopropionaten oder -dipropionaten, einzeln oder in Mischungen, ausgewählt sind.

21. Zusammensetzung nach einem der Ansprüche 19 oder 20, **dadurch gekennzeichnet, dass** die Verbindung (B) aus den mineralischen Partikeln wie den Partikeln aus Titandioxid, Siliciumdioxid, Cerdioxid ausgewählt ist.

22. Zusammensetzung nach einem der vorhergehenden Ansprüche, **dadurch gekennzeichnet, dass** das Molverhältnis der Gesamtheit der kationischen Ladungen zur Gesamtheit der anionischen Ladungen in der Zusammensetzung, bei pHo, im Bereich von 0,001 bis 1.000, vorzugsweise von 0,01 bis 100, insbesondere von 0,1 bis 10, liegt.

23. Verwendung der Zusammensetzung nach einem der vorhergehenden Ansprüche auf den Gebieten der Ausbeutung von Erdöl- oder Gaslagerstätten, der Reinigung, der Kosmetik.

24. Formulierungen, welche die Zusammensetzung nach einem der Ansprüche 1 bis 22 umfassen und für die Gebiete der Ausbeutung von Erdöl- oder Gaslagerstätten, der Reinigung, der Kosmetik bestimmt sind.
